# EUROPÄISCHE PATENTSCHRIFT

(11) **EP 3 176 588 B1**
(45) Veröffentlichungstag und Bekanntmachung des Hinweises auf die Patenterteilung: **01.07.2020**
(21) Anmeldenummer: 16194060.6
(22) Anmeldetag: 17.10.2016
(51) Int. Cl.: G01P 3/68, B23K 26/342, B23K 26/082, B23K 26/03, B23K 101/00

(54) **ERMITTELN EINER SCANGESCHWINDIGKEIT EINER FERTIGUNGSVORRICHTUNG ZUM ADDITIVEN HERSTELLEN**
DETERMINING A SCAN SPEED OF AN ADDITIVE DEVICE FOR ADDITIVE MANUFACTURING
DÉTERMINATION D'UNE VITESSE DE BALAYAGE D'UN DISPOSITIF DE FABRICATION ADDITIVE

(30) Priorität: 03.12.2015 DE 102015224130
(43) Veröffentlichungstag der Anmeldung: 07.06.2017
(73) Patentinhaber: MTU Aero Engines AG, 80995 München (DE)
(72) Erfinder: Ladewig, Alexander, 83707 Bad Wiessee (DE); Schlick, Georg, 80809 München (DE); Casper, Johannes, 85737 München (DE); Bürger, Laura, 85221 Dachau (DE); Friedberger, Katrin, 85235 Odelzhausen (DE); Liebl, Christian, 85461 Bockhorn (DE)

(56) Entgegenhaltungen:
- EP-A1- 0 758 952
- DE-A1-102013 017 792
- S Kleszczynski ET AL: "ERROR DETECTION IN LASER BEAM MELTING SYSTEMS BY HIGH RESOLUTION IMAGING", Proceedings of the Twenty Third Annual International Solid Freeform Fabrication Symposium, 6. August 2012 (2012-08-06), Seiten 975-987, XP055203165, Gefunden im Internet: URL:http://sffsymposium.engr.utexas.edu/Ma nuscripts/2012/2012-74-Kleszczynski.pdf [gefunden am 2015-07-17]
- Eos: "EOSTATE MeltPool: automated, intelligent, real-time Process Monitoring for Direct Metal Laser-Sintering (DMLS)", , 18. November 2015 (2015-11-18), XP055357219, Frankfurt Gefunden im Internet: URL:https://www.eos.info/press/eostate-mel tpool_automated-real-time-monitoring-for-d irect-metal-laser-sintering [gefunden am 2017-03-21]

## Beschreibung

Die Erfindung betrifft ein Verfahren zum Ermitteln einer Scangeschwindigkeit eines Hochenergiestrahls einer Fertigungsvorrichtung zum additiven Herstellen eines Bauteils, insbesondere eines Bauteils einer Strömungsmaschine (siehe, z.B., US 2011/0286478 A1). Weiterhin betrifft die Erfindung ein Verfahren zum Betreiben einer Fertigungsvorrichtung zum additiven Herstellen eines Bauteils gemäß dem Oberbegriff des Patentanspruchs 8. Zudem betrifft die Erfindung eine Fertigungsvorrichtung zum additiven Herstellen eines Bauteils, insbesondere eines Bauteils einer Strömungsmaschine (siehe, z.B. Pressemitteilung "EOSTATE MeltPool: automated, intelligent, real-time Process Monitoring for Direct Metal Laser-Sintering (DMLS)" vom 18.11.2015 unter https://www.eos.info/ press/eostate-meltpool_automated-real-time-monitoring-for-direct-metal-laser-sintering).

In dem Artikel in "Science and Technology of Welding and Joining" vom April 2004 mit dem Titel "Review of laser welding monitoring" von Deyong You und Seiji Katayama wird eine Übersicht gegeben, welche Methoden sich zur Überwachung von Laserfügeprozessen eignen. Insbesondere werden dabei mehrere optische und thermische Methoden beschrieben.

Ein optisches Verfahren zum Ermitteln einer Scangeschwindigkeit eines Hochenergiestrahls einer Fertigungsvorrichtung zum additiven Herstellen eines Bauteils ist aus der US 2011/0286478 A1 bekannt. Bei der dort vorgestellten Methode wird ein Laser mit einem Pulsgenerator so getaktet, dass er eine gestrichelte Spur auf einer Oberfläche erzeugt. Die gestrichelte Spur wird dabei beispielsweise durch lokales Aufschmelzen eines pulverförmigen Materials in einem Pulverbett mittels des Laserstrahls erzeugt. Nach Erzeugen der Spur wird diese vermessen. Alternativ oder zusätzlich können auch die Anzahl der Unterbrechungen und/oder jeweilige in das Pulverbett eingeschmolzener Striche gezählt werden. In Abhängigkeit von dieser Messung und/oder dieser Zählung und in Abhängigkeit von dem Signal des Pulsgebers kann dann eine Scangeschwindigkeit des Lasers bestimmt werden.

Aufgabe der vorliegenden Erfindung ist es, ein Verfahren zum Ermitteln einer Scangeschwindigkeit eines Hochenergiestrahls einer Fertigungsvorrichtung sowie ein Verfahren zum Betreiben einer solchen Fertigungsvorrichtung zu schaffen, mittels welchen ein additives Herstellungsverfahren besonders gut qualitativ abgesichert werden kann. Außerdem ist es Aufgabe der Erfindung, eine Fertigungsvorrichtung zum additiven Herstellen eines Bauteils zu schaffen, welche besonders zuverlässig arbeitet.

Diese Aufgaben werden erfindungsgemäß durch ein Verfahren zum Ermitteln einer Scangeschwindigkeit mit den Merkmalen des Patentanspruchs 1, durch ein Verfahren zum Betreiben einer Fertigungsvorrichtung mit den Merkmalen des Patentanspruchs 8 und durch eine Fertigungsvorrichtung zum additiven Herstellen eines Bauteils mit den Merkmalen des Patentanspruchs 12 gelöst. Vorteilhafte Ausgestaltungen mit zweckmäßigen Weiterbildungen der Erfindung sind in den jeweiligen Unteransprüchen angegeben, wobei vorteilhafte Ausgestaltungen der jeweiligen Verfahren und der Fertigungsvorrichtung als vorteilhafte Ausgestaltungen des jeweiligen anderen Verfahrens sowie der Fertigungsvorrichtung und umgekehrt anzusehen sind.

Ein erster Aspekt der Erfindung betrifft ein Verfahren zum Ermitteln einer Scangeschwindigkeit eines Hochenergiestrahls einer Fertigungsvorrichtung zum additiven Herstellen eines Bauteils. Dabei wird der mittels einer Strahlungsquelle der Vorrichtung erzeugte Hochenergiestrahl über eine Oberfläche geführt. Dafür kann beispielsweise der Hochenergiestrahl mittels mindestens einer Ablenkvorrichtung der Fertigungsvorrichtung abgelenkt werden. Alternativ oder zusätzlich kann zum Beispiel auch die Strahlungsquelle selbst zum Führen des Hochenergiestrahls über die Oberfläche bewegt werden. Die Oberfläche kann beispielsweise aus einem pulverförmigen, pastösen oder flüssigen Ausgangsmaterial gebildet sein, welches mittels des Hochenergiestrahls zum additiven Herstellen des Bauteils aufgeschmolzen wird. Bei dem Ausgangsmaterial kann es sich beispielsweise um Metalle, Metalllegierungen, Keramik und/oder Kunststoffe handeln.

Eine während einer vorbestimmten Zeitdauer mit dem Hochenergiestrahl angestrahlte Strecke auf der Oberfläche wird durch Aufzeichnung jeweiliger Helligkeitswerte der Oberfläche mittels einer Erfassungsvorrichtung während der vorbestimmten Zeitdauer erfasst. Die Scangeschwindigkeit wird dann in Abhängigkeit von der vorbestimmten Zeitdauer und der erfassten angestrahlten Strecke mittels einer Auswertvorrichtung berechnet. Die Scangeschwindigkeit entspricht dabei einer Geschwindigkeit, mit welcher der Hochenergiestrahl über die Oberfläche geführt wird. Die Scangeschwindigkeit kann beispielsweise durch eine Division einer Länge der erfassten Strecke durch die vorbestimmte Zeitdauer berechnet werden. Bei der Strahlungsquelle kann es sich beispielsweise um einen Laser beziehungsweise Laserdiode handeln. Die Scangeschwindigkeit kann auch als Überstreichgeschwindigkeit bezeichnet werden.

Die Erfassung wird dabei so gesteuert, dass, während der Hochenergiestrahl entlang der Oberfläche beziehungsweise der Strecke bewegt wird, für ein definiertes Zeitfenster jeweilige Helligkeitswerte der Oberfläche aufgezeichnet werden. Dadurch lässt sich die Strecke ermitteln. Durch die definierte Aufnahmezeit kann die Geschwindigkeit errechnet werden. Es ist also beispielsweise nicht mehr nötig, die Strecke mit einem Messmikroskop zu vermessen. Außerdem ist keine aufwendige Steuerung der Strahlungsquelle mittels eines Pulsgebers notwendig. Bei dem Verfahren ist es also nicht vorgesehen, die Strahlungsquelle zu steuern, um die Scangeschwindigkeit zu ermitteln, sondern die Erfassungseinrichtung. Dafür kann die Erfassungseinrichtung mittels eines Pulsgebers ein- und ausgeschaltet werden, um die vorbestimmte Zeitdauer für die Erfassung einzuhalten. Alternativ kann auch eine Blende der Erfassungseinrichtung geöffnet und geschlossen werden. Die Erfassungseinrichtung kann dabei im Vergleich zur Strahlungsquelle präziser und schneller gesteuert werden. Dabei kann die Erfassungseinrichtung in einem konstanten Abstand zu der Oberfläche angeordnet sein, um eine besonders einfache Ermittlung der angestrahlten Strecke zu ermöglichen.

Die Scangeschwindigkeit ist ein wichtiger Fertigungsparameter beim additiven Herstellen eines Bauteils. Die Scangeschwindigkeit hat einen hohen Einfluss auf die resultierende Bauteilqualität. Insbesondere muss die Scangeschwindigkeit genau bekannt sein, um besonders hohe Fertigungstoleranzen einhalten zu können. Gerade bei der Herstellung von einem Bauteil einer Strömungsmaschine, wie beispielsweise einer Laufschaufel oder Leitschaufel, ist eine hohe Fertigungsgenauigkeit sehr wichtig, um eine Strömungsmaschine mit hohem Wirkungsgrad herstellen zu können. Gleichzeitig sollte die Scangeschwindigkeit auch bekannt sein, um die Leistung der Strahlungsquelle auf die Scangeschwindigkeit abstimmen zu können. So wird ebenfalls eine hohe Bauteilqualität sichergestellt. Das beschriebene Verfahren zur Ermittlung der Scangeschwindigkeit bei einer additiven Fertigungsvorrichtung ist eine besonders günstige, schnelle und effektive Methode. Die Bauteilqualität kann so gut abgesichert und/oder verbessert werden. Gleichzeitig kann mittels des Ermittelns der Scangeschwindigkeit ein Verständnis des Herstellungsprozesses erhöht werden.

Die Scangeschwindigkeit kann dabei beispielsweise durch Umweltfaktoren beeinflusst werden. Beispielsweise kann die Scangeschwindigkeit bei unterschiedlichen Umgebungstemperaturen unterschiedlich groß sein. Bei der Scangeschwindigkeit kann es sich insbesondere um eine maximale Geschwindigkeit handeln, mit welcher der Hochenergiestrahl über die Oberfläche geführt werden kann. Die Scangeschwindigkeit kann sich auch durch Alterungserscheinungen bei der Fertigungsvorrichtung verändern. Beispielsweise kann eine Schmierung eines Getriebes zum Drehen eines Spiegels der Ablenkvorrichtung verschmutzen oder verkleben, wodurch der Spiegel schwergängiger drehbar ist und sich deswegen gegebenenfalls langsamer dreht.

In weiterer vorteilhafter Ausgestaltung des erfindungsgemäßen Verfahrens zum Bestimmen der Scangeschwindigkeit ist es vorgesehen, dass die angestrahlte Strecke anhand von in der Erfassungseinrichtung während der vorbestimmten Zeitdauer belichteten Pixeln ermittelt wird. Die Erfassung ist dabei kontinuierlich während der vorbestimmten Zeitdauer. Dafür kann beispielsweise eine Blende der Erfassungseinrichtung während der gesamten vorbestimmten Zeitdauer geöffnet sein. Dadurch werden jeweilige Pixel eines Chips der Erfassungseinrichtung während der vorbestimmten Zeitdauer entsprechend der angestrahlten Strecke belichtet. Dies ist vergleichbar mit einer fotografischen Aufnahme mit langer Belichtungsdauer von einem fahrenden Auto bei Nacht. Ein Scheinwerfer des Autos erscheint auf dem Bild aufgrund der Bewegung des Autos als lang gezogener Strich. In ähnlicher Weise kann eine Reflexion des Hochenergiestrahls von der Oberfläche oder ein lokales, durch das Bestrahlen mit dem Hochenergiestrahl bewirktes Glühen der Oberfläche ebenfalls als lang gezogener Strich aufgezeichnet werden. Damit ist es nicht mehr notwendig, jeweilige Einzelbilder oder ein Video aufwendig auszuwerten, um die angestrahlte Strecke während der vorbestimmten Zeitdauer zu ermitteln. Ebenso ist es nicht notwendig, einen Anfangszeitpunkt und einen Endzeitpunkt der Aufnahme genau auf das Ablenken des Hochenergiestrahls abzustimmen. Stattdessen sollte lediglich dafür gesorgt werden, dass die vorbestimmte Zeitdauer für die Erfassung genau eingehalten wird, um eine besonders präzise Bestimmung der Scangeschwindigkeit zu ermöglichen.

Als Sensor eignet sich dabei beispielsweise ein sogenannter CMOS-Sensor. Alternativ kann als Sensor auch ein CCD-Chip eingesetzt werden. Die Genauigkeit der Bestimmung der Scangeschwindigkeit hängt dabei im Wesentlichen von der Auflösung der Erfassungseinrichtung und von der Genauigkeit der Einhaltung der vorbestimmten Zeitdauer für die Erfassung ab. Außerdem ist es vorteilhaft, wenn ein Rauschen der Erfassung beispielsweise bewirkt durch mit aufgenommenes Streulicht, unterdrückt wird.

In weiterer vorteilhafter Ausgestaltung des erfindungsgemäßen Verfahrens zum Bestimmen der Scangeschwindigkeit des Hochenergiestrahls ist es vorgesehen, dass der Hochenergiestrahl während der Erfassung in einer geraden Linie und/oder einer gekrümmten Linie über die Oberfläche geführt wird. Bei der geraden Linie ist eine besonders einfache und besonders genaue Ermittlung der Scangeschwindigkeit möglich, da keine Berechnungsfehler durch eventuell nicht mit berücksichtigte Kurven in der Strecke entstehen. Gleichzeitig kann so die Ablenkvorrichtung besonders einfach angesteuert werden. Dadurch gibt es auch keine Effekte bei einer Überlagerung von mehreren Ablenkrichtungen, welche die Bestimmung der Scangeschwindigkeit beeinflussen könnten. Bei einer gekrümmten Linie kann dagegen auch die Scangeschwindigkeit bei einer speziellen Ansteuerung der Fertigungsvorrichtung erfasst werden. Bei einer Füllung eines inneren Volumens des Bauteils wird der Hochenergiestrahl üblicherweise in einer geraden Linie über die Oberfläche geführt. Anschließend kann der Hochenergiestrahl noch über die Kontur des Bauteils in der jeweiligen Schicht, also eine äußere Begrenzung des Volumens, geführt werden, um die Bauteilqualität zu verbessern. Diese spezielle Ansteuerung der Fertigungsvorrichtung beziehungsweise andersartige Führung des Hochenergiestrahls über die Oberfläche kann in einer anderen Scangeschwindigkeit bei dieser speziellen Ansteuerung resultieren. Diese Scangeschwindigkeit bei der speziellen Ansteuerung kann so auch problemlos ermittelt werden. Dabei muss die Länge der erfassten Strecke gegebenenfalls aufwendiger berechnet werden, um auch eine Länge von gekrümmten Linien korrekt zu ermitteln.

In weiterer vorteilhafter Ausgestaltung des erfindungsgemäßen Verfahrens zum Bestimmen der Scangeschwindigkeit des Hochenergiestrahls ist es vorgesehen, dass während der vorbestimmten Zeitdauer eine Mehrzahl von angestrahlten Strecken auf der Oberfläche mittels der Erfassungsvorrichtung erfasst wird und die Scangeschwindigkeit in Abhängigkeit von der vorbestimmten Zeitdauer und der erfassten Mehrzahl von angestrahlten Strecken mittels der Auswertvorrichtung berechnet wird. Dadurch kann eine besonders große angestrahlte Gesamtstrecke erfasst werden, wodurch Fehler bei der Ermittlung einer Länge jeder einzelnen Strecke bei der Ermittlung der Scangeschwindigkeit geringer ins Gewicht fallen. Das Verfahren kann somit eine gemittelte Scangeschwindigkeit über mehrere Strecken in einer einzigen Messung erfassen. Ein solches Vorgehen erlaubt eine besonders robuste Bestimmung der Scangeschwindigkeit. Gleichzeitig kann so eine Erfassungseinrichtung genutzt werden, welche eine im Verhältnis zur Scangeschwindigkeit lange Aufnahmezeit zur Erfassung einer Aufnahme benötigt. Beispielsweise müsste eine Kamera, um nur eine Strecke aufzunehmen, eine Aufnahme in 1ms oder schneller abschließen können. Eine solche Kamera ist teuer, außerdem ist eine Aufnahme mit einer solch kurzen Belichtungszeit sehr fehleranfällig. Wird dagegen eine Mehrzahl von Spuren erfasst, kann beispielsweise eine Kamera genutzt werden, welche die Aufnahme in 100ms abschließt. Die Kamera kann somit preiswerter sein und die Ermittlung der Scangeschwindigkeit ist weniger fehleranfällig.

In weiterer vorteilhafter Ausgestaltung des erfindungsgemäßen Verfahrens zum Bestimmen der Scangeschwindigkeit des Hochenergiestrahls ist es vorgesehen, dass die Scangeschwindigkeit in Abhängigkeit von einer Zeitdauer, welche für einen Wechsel der Anstrahlung einer ersten Strecke zu einer zweiten Strecke benötigt wird, mittels der Auswertvorrichtung berechnet wird. Dadurch kann die Mehrzahl von angestrahlten Strecken zur Ermittlung der Scangeschwindigkeit herangezogen werden, ohne dass es zu Fehlern aufgrund eines Wechsels der Anstrahlung von einer Strecke zu einer anderen Strecke kommt. Die Mehrzahl von angestrahlten Strecken kann beispielsweise durch eine einzige Führungsspur erzeugt werden, wobei die Erzeugung des Hochenergiestrahls in Teilbereichen dieser Führungsspur deaktiviert ist und somit die Oberfläche nicht angestrahlt wird. Beispielsweise kann eine mäanderförmige Ablenkung des Hochenergiestrahls vorgesehen sein, wobei der Hochenergiestrahl nur in den parallelen Teilbereichen dieser mäanderförmigen Ablenkung aktiviert wird. Dadurch werden dann mehrere zueinander parallele Strecken angestrahlt. Die Zeitdauer, welche für einen Wechsel der Anstrahlung der ersten Strecke zu der zweiten Strecke notwendig ist, entspricht dabei der Dauer für das Führen des Hochenergiestrahls durch eine Kurve der mäanderförmigen Spur. Beispielsweise wird in diesem Bereich eine Schwenkrichtung eines Spiegels einer Ablenkvorrichtung zum Ablenken des Hochenergiestrahls umgekehrt. Die Zeitdauer für einen solchen Wechsel der Ablenkrichtung kann bekannt sein oder präzise geschätzt werden. Die Zeitdauer für den Wechsel der Ablenkrichtung wird auch als Umkehrgeschwindigkeit bezeichnet. Vorzugsweise wird dabei der Laserstrahl bei der zweiten Strecke in einer zu der ersten Strecke entgegengesetzten Richtung über die Oberfläche geführt.

In weiterer vorteilhafter Ausgestaltung des erfindungsgemäßen Verfahrens zum Bestimmen der Scangeschwindigkeit des Hochenergiestrahls ist es vorgesehen, dass der Hochenergiestrahl wenigstens während der Erfassung über einen bestimmten Teilbereich der Oberfläche geführt wird, welcher nicht ein Teilbereich der Oberfläche ist, welcher zum additiven Herstellen des Bauteils genutzt wird. Dieser Teilbereich für die Bestimmung der Scangeschwindigkeit kann auch als Testbereich bezeichnet werden. Ein Teilbereich der Oberfläche dient also als Arbeitsfläche und ein anderer Teilbereich als Testfläche. Der Teilbereich der Oberfläche, der zum additiven Herstellen des Bauteils genutzt wird, kann beispielsweise ein sogenanntes Pulverbett sein. Dazu kann ein zusätzlicher separater Testbereich für die Bestimmung der Scangeschwindigkeit vorgesehen sein. Durch diesen separaten Testbereich wird zum einen eine maximale Bauteilgröße nicht durch eine Teststrecke eingeschränkt. Außerdem kann der Testbereich beispielsweise so gestaltet sein, dass er wiederverwendbar ist. Dafür kann der Testbereich beispielsweise aus einer Keramik gebildet sein. Bei einem Pulverbett muss beispielsweise nach jedem Drüberführen des Hochenergiestrahls eine neue Pulverschicht aufgetragen werden. Dieser zusätzliche Aufwand kann in dem Testbereich beziehungsweise bei der Testoberfläche eingespart werden. Gleichzeitig kann die Testoberfläche auch so gestaltet sein, dass diese eine besonders einfache und/oder präzise Erfassung der angestrahlten Strecke und/oder angestrahlten Fläche ermöglicht. Dazu kann die Testoberfläche beispielsweise aus einem besonders reflexionsarmen Material bestehen. Gerade bei langen Aufnahmezeiten zum Erfassen der angestrahlten Strecke und/oder der Mehrzahl von angestrahlten Strecken können Reflexionen zu einem Rauschen der Aufnahme und damit zu einer fehlerhaften Ermittlung der Scangeschwindigkeit führen.

In weiterer vorteilhafter Ausgestaltung des erfindungsgemäßen Verfahrens zum Bestimmen der Scangeschwindigkeit des Hochenergiestrahls ist es vorgesehen, dass die angestrahlte Strecke und/oder die Mehrzahl von angestrahlten Strecken mittels der Erfassungseinrichtung im sichtbaren und/oder infraroten Spektralbereich erfasst wird. Beispielsweise kann Licht im Spektralbereich von 350nm bis 1 lOOnm erfasst werden. Eine Erfassung im sichtbaren Spektralbereich ist besonders einfach und kann mit besonders kostengünstigen Sensoren erfolgen. Bei einer Erfassung im infraroten Spektralbereich können jeweilige Störeinflüsse durch Reflexion und/oder Spiegelung besonders einfach ausgeschlossen werden. Es eignet sich daher insbesondere bei einer Bestimmung einer angestrahlten Strecke welche simultan zur Herstellung des Bauteils dient. Jeweilige Helligkeitswerte der Oberfläche können dabei als jeweilige Temperaturwerte beziehungsweise jeweilige Stärke einer Wärmestrahlung verstanden werden. Insbesondere bei einer Erfassung im nahen infraroten Spektralbereich muss durch den Hochenergiestrahl keine optische Veränderung der Testoberfläche bewirkt werden, sondern beispielsweise lediglich eine lokale Erwärmung. Insbesondere kann die angestrahlte Strecke und/oder die Mehrzahl von angestrahlten Strecken mittels einer sogenannten optischen Tomographie erfasst werden. Bei der optischen Tomographie handelt es sich um ein bildgebendes Verfahren zur Anzeige einer Oberflächentemperatur von einzelnen Schichten bei einem additiven Herstellungsverfahren.

Ein zweiter Aspekt der Erfindung betrifft ein Verfahren zum Betreiben einer Fertigungsvorrichtung zum additiven Herstellen eines Bauteils, insbesondere eines Bauteils einer Strömungsmaschine. Erfindungsgemäß ist es dabei vorgesehen, dass eine Scangeschwindigkeit eines mittels mindestens einer Strahlungsquelle der Fertigungsvorrichtung erzeugten und über eine Oberfläche geführten Hochenergiestrahls mittels eines Verfahrens gemäß dem ersten Erfindungsaspekt bestimmt wird. Die sich aus dem Verfahren zum Bestimmen der Scangeschwindigkeit des Hochenergiestrahls der Fertigungsvorrichtung ergebenden Merkmale und Vorteile sind den Beschreibungen des ersten Erfindungsaspekts zu entnehmen, wobei vorteilhafte Ausgestaltungen des ersten Erfindungsaspekts als vorteilhafte Ausgestaltungen des zweiten Erfindungsaspekts und umgekehrt anzusehen sind.

In weiterer vorteilhafter Ausgestaltung des erfindungsgemäßen Verfahrens zum Betreiben der Fertigungsvorrichtung ist es vorgesehen, dass eine Steuerung der Fertigungsvorrichtung in Abhängigkeit von der ermittelten Scangeschwindigkeit kalibriert wird. Die Kalibrierung kann mittels der Auswertvorrichtung vorgenommen werden.

Ebenso ist es möglich, eine Kalibrierung der Fertigungsvorrichtung in Abhängigkeit von der ermittelten Scangeschwindigkeit zu überprüfen. Durch die Kalibrierung können jeweilige Umwelteinflüsse auf die Scangeschwindigkeit der Fertigungsvorrichtung berücksichtigt werden. Insbesondere kommt es so nur zu einer besonders geringen oder gar keinen Beeinflussung der Bauteilqualität durch eine Umgebungstemperatur. Außerdem können durch eine Kalibrierung jeweilige Fertigungstoleranzen besonders gut eingehalten werden. Dabei ist es nicht notwendig, jeweilige Prüf- und Kalibrierungsmessungen mit zusätzlichen Geräten durchzuführen. Die Fertigungsvorrichtung kann stattdessen selber eine Messung zur Kalibrierung durchführen. Es sind also keine Sondermessungen und/oder Laboruntersuchungen notwendig. Dadurch kann eine Kalibrierung regelmäßig und/oder sehr kostengünstig durchgeführt werden. Somit kann die Bauteilqualität beim Herstellen besonders gut abgesichert werden.

In weiterer vorteilhafter Ausgestaltung des Verfahrens zum Betreiben der Fertigungsvorrichtung ist es vorgesehen, dass mittels des Anstrahlens der Oberfläche das Bauteil wenigstens teilweise hergestellt wird, wobei die Scangeschwindigkeit wenigstens teilweise während dieser Herstellung des Bauteils erfasst wird. Damit ist also eine Prozessüberwachung und/oder Regelung während des Herstellens möglich. Dies wird auch als Online Monitoring bezeichnet. Die Scangeschwindigkeit kann intermittierend oder kontinuierlich während des Herstellens des Bauteils überwacht werden. Damit kann die Bauteilqualität besonders gut sichergestellt werden. Gleichzeitig ist die Fertigungsvorrichtung nicht für das Herstellen von Bauteilen während des Bestimmens der Scangeschwindigkeit gesperrt. Dadurch ist die effektive Einsatzzeit der Fertigungsvorrichtung besonders hoch.

In weiterer vorteilhafter Ausgestaltung des erfindungsgemäßen Verfahrens zum Betreiben der Fertigungsvorrichtung ist es vorgesehen, dass die Strahlungsquelle und/oder eine Ablenkvorrichtung der Fertigungsvorrichtung zum Ablenken des Hochenergiestrahls in Abhängigkeit von der ermittelten Scangeschwindigkeit gesteuert werden. So kann die ermittelte Scangeschwindigkeit unmittelbar in einer Ansteuerung der Fertigungsvorrichtung zum Erhöhen der Bauteilqualität berücksichtigt werden. Insbesondere kann so auch eine Korrektur von jeweiligen Steuerungsparametern während der Herstellung des Bauteils aufgrund einer sich verändernden Scangeschwindigkeit berücksichtigt werden. Beispielsweise kann das additive Herstellen zu einer Temperaturerhöhung bei der Fertigungsvorrichtung während des Herstellens führen. Diese Temperaturveränderung kann einen Einfluss auf die Scangeschwindigkeit haben. Diese Veränderung kann so unmittelbar berücksichtigt werden. Dadurch können Fertigungstoleranzen besonders gut eingehalten werden.

Ein dritter Aspekt der Erfindung betrifft eine Fertigungsvorrichtung zum additiven Herstellen eines Bauteils, insbesondere eines Bauteils einer Strömungsmaschine, gemäß Anspruch 12. Bei der Auswertvorrichtung kann es sich beispielsweise um einen Steuerungscomputer der Fertigungsvorrichtung handeln.

Die Fertigungsvorrichtung ist also dazu ausgebildet, ein Verfahren zum Ermitteln der Scangeschwindigkeit des Hochenergiestrahls gemäß dem ersten Erfindungsaspekt durchzuführen. Weiterhin ist die Fertigungsvorrichtung dazu ausgebildet, nach einem Verfahren gemäß dem zweiten Erfindungsaspekt betrieben zu werden. Die sich aus dem Verfahren gemäß dem ersten Erfindungsaspekt und gemäß dem zweiten Erfindungsaspekt ergebenden Merkmal und Vorteile sind den Beschreibungen des ersten und des zweiten Erfindungsaspekts zu entnehmen, wobei vorteilhafte Ausgestaltungen des ersten und des zweiten Erfindungsaspekts als vorteilhafte Ausgestaltungen des dritten Erfindungsaspekts und umgekehrt anzusehen sind.

In weiterer vorteilhafter Ausgestaltung der erfindungsgemäßen Fertigungsvorrichtung ist es vorgesehen, dass die Fertigungsvorrichtung dazu ausgebildet ist, das Bauteil mittels eines selektiven Laserschmelzverfahrens herzustellen. Das selektive Laserschmelzverfahren kann auch als Selective Laser Melting oder kurz als SLM bezeichnet werden. Mittels des selektiven Laserschmelzverfahrens können besonders präzise Bauteile mit hohen Fertigungstoleranzen und komplexen Geometrien hergestellt werden. Dabei ist es besonders vorteilhaft für die Bauteilqualität, wenn die Scangeschwindigkeit einfach ermittelt und/oder kontinuierlich berücksichtigt werden kann. Bei dem herzustellenden Bauteil kann es sich um ein Bauteil einer Strömungsmaschine handeln.

Weitere Vorteile, Merkmale und Einzelheiten der Erfindung ergeben sich aus der nachfolgenden Beschreibung eines bevorzugten Ausführungsbeispiels sowie anhand der Zeichnungen.

Dabei zeigt:
- Fig. 1: in einer schematischen Schnittansicht eine Fertigungsvorrichtung zum additiven Herstellen eines Bauteils; und
- Fig. 2: in einer schematischen Draufsicht einen Teilbereich einer Oberfläche, auf welche ein Hochenergiestrahl mit der Fertigungsvorrichtung gemäß Fig. 1 gestrahlt wird.

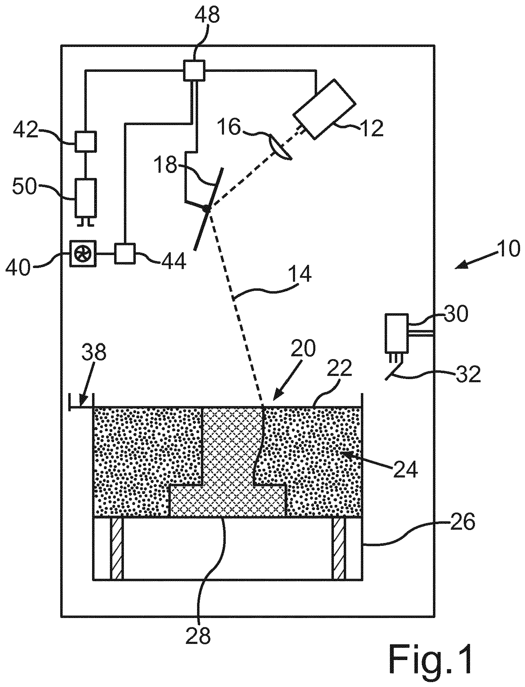

Fig. 1 zeigt in einer schematischen Schnittansicht eine Fertigungsvorrichtung 10 zum additiven Herstellen eines Bauteils, insbesondere eines Bauteils einer Strömungsmaschine. Die Fertigungsvorrichtung 10 umfasst dabei eine Strahlungsquelle 12, welche beispielsweise als Laserdiode ausgebildet ist. Mittels der Strahlungsquelle 12 wird ein als Laserstrahl ausgebildeter Hochenergiestrahl 14 emittiert. Dieser Hochenergiestrahl 14 wird mittels einer Fokussiereinrichtung 16 gebündelt. Weiterhin wird der Hochenergiestrahl 14 mittels einer Ablenkvorrichtung 18 über eine Oberfläche 20 geführt. Dazu umfasst die Ablenkvorrichtung 18 beispielsweise einen um zwei Achsen verschwenkbar gelagerten Spiegel. Die Ablenkvorrichtung 18 kann aber auch beispielsweise zwei um eine Achse schwenkbare Spiegel umfassen. Alternativ kann beispielsweise auch die Strahlungsquelle 12 selbst rotatorisch und/oder translatorisch bewegt werden, um den Hochenergiestrahl 14 über die Oberfläche 20 zu führen. Die Oberfläche 20 ist dabei durch die oberste Pulverschicht 22 eines Pulverbetts 24 gebildet, welches auf einer höhenverstellbaren Bauplattform 26 aufgetragen ist. Das Pulver kann beispielsweise aus einem Metall, einer Metalllegierung, einer Keramiken und/oder einem Kunststoff gebildet sein. Auch eine Mischung verschiedener Pulver aus unterschiedlichen Werkstoffen ist möglich.

Mittels der Fertigungsvorrichtung 10 lässt sich ein Bauteil mittels eines sogenannten selektiven Laserschmelzverfahrens herstellen. Durch den Hochenergiestrahl 14 wird die oberste Pulverschicht 22 an der Oberfläche 20 regional zum Herstellen des Bauteils aufgeschmolzen. Dadurch kann beispielsweise die komplexe Geometrie einer Laufschaufel einer Strömungsmaschine erzeugt werden. In Fig. 1 ist bereits ein Teil 28 dieser Leitschaufel in dem Pulverbett 24 fertiggestellt worden. Das Bauteil wird dabei schichtweise aufgebaut. Nach dem fertigen Aufbau einer Schicht wird mittels der Pulververteilungsvorrichtung 30 eine neue Pulverschicht auf der Bauplattform 26 aufgetragen. Diese Pulverschicht wird mittels des Rakels 32 glattgestrichen.

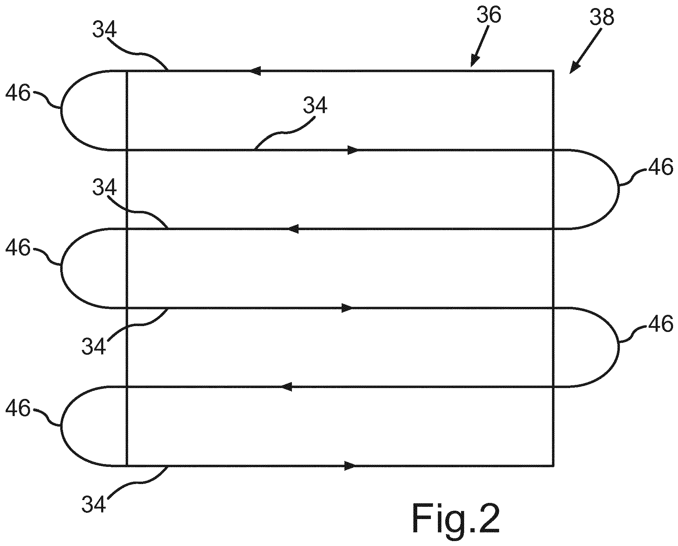

Um eine besonders hohe Bauteilqualität sicherstellen zu können und hohe Fertigungstoleranzen bei der Herstellung einhalten zu können, sollte eine Scangeschwindigkeit, mit der der Hochenergiestrahl 14 über die Oberfläche 20 geführt wird, bekannt sein. Die Scangeschwindigkeit entspricht dabei im Wesentlichen der Geschwindigkeit, mit welcher der Hochenergiestrahl 14 über die Oberfläche 20 geführt wird. In dem gezeigten Beispiel entspricht die Scangeschwindigkeit einer Geschwindigkeit, mit welcher der Hochenergiestrahl 14 mittels der Ablenkvorrichtung 18 abgelenkt werden kann beziehungsweise abgelenkt wird. Zum Ermitteln der Scangeschwindigkeit umfasst die Fertigungsvorrichtung 10 eine Erfassungsvorrichtung 50, mittels welcher eine mit dem Hochenergiestrahl 14 angestrahlte Strecke 34 und/oder Mehrzahl von angestrahlten Strecken 36 für eine vorbestimmte Zeitdauer erfasst werden kann. Die angestrahlte Strecke 34 und/oder die Mehrzahl von angestrahlten Strecken 36 sind dabei in der schematischen Draufsicht eines Teilbereichs 38 der Oberfläche 20 in Fig. 2 gezeigt.

Die angestrahlte Strecke 34 und/oder die Mehrzahl von angestrahlten Strecken 36 werden dabei durch Aufzeichnen jeweiliger Helligkeitswerte der Oberfläche 20 während der vorbestimmten Zeitdauer erfasst. Dazu wird beispielsweise ein Shutter 40, welcher zwischen der Erfassungsvorrichtung 50 und der Oberfläche 20 angeordnet ist, nur während der vorbestimmten Zeitdauer geöffnet. Die Öffnung des Shutters 40 kann dabei durch einen Pulsgeber 44 gesteuert werden, um jeweils nur für eine vorbestimmte Zeitdauer geöffnet zu sein. Dadurch ist es nicht notwendig, die Strahlungsquelle 12 mit der Erfassungsvorrichtung 50 zu synchronisieren. Ebenso ist es nicht notwendig, die Strahlungsquelle 12 beispielsweise mit einem Pulsgeber an- und auszuschalten. Bei der Erfassungsvorrichtung 50 werden während der vorbestimmten Zeitdauer auf einem Sensorchip jeweilige Pixel belichtet, welche den Strecken 34 gemäß Fig. 2 entsprechen. Diese belichteten Pixel können beispielsweise einfach mittels einer Auswertvorrichtung 42 gezählt werden. Dabei kann ein minimaler Helligkeitswert berücksichtigt werden, welcher bei der Belichtung überschritten werden muss. Bei einer bekannten Brennweite und bekanntem Abstand der Erfassungseinrichtung 50 zu der Oberfläche 20 kann durch die Anzahl der belichteten Pixel unmittelbar eine Länge der angestrahlten Strecke 34 und/oder eine Gesamtlänge der Mehrzahl von angestrahlten Strecken 36 berechnet werden. Die Scangeschwindigkeit ergibt sich dann unmittelbar aus der angestrahlten Strecke 34 und/oder aus oder Mehrzahl von angestrahlten Strecken 36 und der vorbestimmten Zeitdauer.

Die Mehrzahl von angestrahlten Strecken 36 wird durch eine einzige Führungsspur erzeugt, wobei die Erzeugung des Hochenergiestrahls in gekrümmten Teilabschnitten 46 dieser Führungsspur deaktiviert ist und somit die Oberfläche 20 nicht angestrahlt wird. Die Führungsspur entspricht einer mäanderförmige Ablenkung des Hochenergiestrahls mittels der Ablenkvorrichtung 18. Dadurch werden dann mehrere zueinander parallele Strecken 34 angestrahlt. Die Zeitdauer, welche für einen Wechsel der Anstrahlung von einer Strecke 34 zu einer anderen Strecke 34 notwendig ist, entspricht dabei der Dauer für das Führen des Hochenergiestrahls durch den Teilabschnitt 46 der mäanderförmigen Spur. In diesem Bereich der in Fig. 2 dargestellten Führungsspur wird eine Schwenkrichtung eines Spiegels der Ablenkvorrichtung 18 zum Ablenken des Hochenergiestrahls umgekehrt. Die Zeitdauer für einen solchen Wechsel der Ablenkrichtung kann bekannt sein oder präzise geschätzt werden. Die Zeitdauer für den Wechsel der Ablenkrichtung wird auch als Umkehrgeschwindigkeit bezeichnet. Bei Kenntnis dieser Umkehrgeschwindigkeit der Ablenkvorrichtung 18 lässt sich so weiterhin auf eine Gesamtgeschwindigkeit während des Hatchens des Bauteils zurückrechnen, auch wenn die Mehrzahl von Strecken 36 gemeinsam erfasst werden. Dadurch kann die Präzision der Ermittlung der Scangeschwindigkeit erhöht werden, da Fehler bei der Ermittlung einer Länge einer einzelnen der angestrahlten Strecke 34 weniger ins Gewicht fallen. Die Erfassung der Mehrzahl von angestrahlten Strecken 36 entspricht so im Wesentlichen der Erfassung einer einzelnen angestrahlten Strecke 34 mit einer Länge, welcher der Gesamtlänge der Mehrzahl von angestrahlten Strecken 36 entspricht. Durch die Erfassung der Mehrzahl von angestrahlten Strecken 36 kann zudem eine höhere Belichtungszeit bei der Erfassungsvorrichtung 50 vorgesehen sein. Dadurch kann beispielsweise eine preisgünstigere Kamera verwendet werden.

Der Hochenergiestrahl 14 wird während der Erfassung für das Bestimmen der Scangeschwindigkeit über den Teilbereich 38 der Oberfläche 20 geführt, welcher nicht ein Teilbereich der Oberfläche 20 ist, welcher zum additiven Herstellen des Bauteils genutzt wird. Der Teilbereich 38 der Oberfläche 20 ist also ein spezieller Testbereich für die Erfassung der Scangeschwindigkeit. Der Teilbereich 38 kann dabei beispielsweise aus einem Material bestehen, welches nicht durch den Hochenergiestrahl 14 aufgeschmolzen wird. Der Teilbereich 38 der Oberfläche 20 kann beispielsweise durch eine Keramik gebildet sein. Dadurch kann die Oberfläche 20 in dem Teilbereich 38, welcher auch als Testbereich bezeichnet wird, für die Erfassung der Scangeschwindigkeit wiederverwendet werden. Die Oberfläche 20 kann in diesem Teilbereich 38 besonders matt sein, um Fehler durch Reflexionen zu verringern. Durch das Bestimmen der Scangeschwindigkeit in dem Teilbereich 38 wird kein unnötiges Pulvermaterial zusammengeschmolzen, welches dann entsorgt oder wiederaufbereitet werden muss. Dadurch arbeitet die Fertigungsvorrichtung 10 besonders effizient. Gleichzeitig wird eine Größe des Teilbereichs der Oberfläche 20, welcher zum Herstellen des Bauteils dient, nicht durch jeweilige zum Bestimmen der Scangeschwindigkeit angestrahlte Strecken begrenzt.

Alternativ oder zusätzlich kann der Hochenergiestrahl 14 aber auch bei einem Herstellen des Bauteils erfasst werden. Der Hochenergiestrahl 14 muss in diesem Fall nicht mehr in einen separaten Teilbereich 38 der Oberfläche 20 abgelenkt werden. Der separate Teilbereich 38 der Oberfläche 20 kann jedoch weiterhin vorgesehen sein, um jeweilige Messungen der Scangeschwindigkeit während des Herstellens des Bauteils zu verifizieren.

Eine Steuerung der Fertigungsvorrichtung 10 kann in Abhängigkeit von der bestimmten Scangeschwindigkeit kalibriert werden. Die Scangeschwindigkeit beziehungsweise die Ablenkgeschwindigkeit der Ablenkvorrichtung 18 kann durch Alterungserscheinungen und/oder äußere Einflüsse wie beispielsweise eine Temperaturänderung verändert werden. Dadurch kann es zu Abweichungen bei der Herstellung des Bauteils kommen. Diese Abweichungen werden durch eine regelmäßige Kalibrierung minimiert oder gänzlich vermieden.

Alternativ oder zusätzlich kann die Ablenkvorrichtung 18 auch während des Herstellens des Bauteils in Abhängigkeit von der bestimmten Scangeschwindigkeit gesteuert werden, wobei die Scangeschwindigkeit dann während der Herstellung kontinuierlich oder intermittierend erfasst wird. Dadurch kann eine Regelung implementiert werden, welche jeweilige Abweichungen der Scangeschwindigkeit während des Herstellungsprozesses mitberücksichtigt. Ebenso kann auch eine Leistung der Strahlungsquelle 12 in Abhängigkeit von der bestimmten Scangeschwindigkeit gesteuert werden. Je nach Geschwindigkeit des Hochenergiestrahls 14 auf der Oberfläche 20 wird unterschiedlich viel Energie pro Fläche in die oberste Pulverschicht 22 eingebracht. Ist die maximale Scangeschwindigkeit beispielsweise durch äußere Einflüsse reduziert worden, kann es deswegen auch sinnvoll sein, eine Leistung der Strahlungsquelle 12 entsprechend zu reduzieren. Zu den oben genannten Zwecken kann die Fertigungsvorrichtung 10 eine Steuervorrichtung 48 umfassen, welche mit der Auswertvorrichtung 42, dem Shutter 40 der Ablenkvorrichtung 18 und der Strahlungsquelle 12 zu deren Steuern verbunden ist.

Die Erfassungsvorrichtung 50 kann beispielsweise einen Sensor zur Erfassung der angestrahlten Strecke 34 und/oder der angestrahlten Fläche 36 umfassen, welche im sichtbaren und/oder infraroten Spektralbereich arbeitet. Alternativ oder zusätzlich können jeweilige Filter in der Erfassungsvorrichtung 50 vorgesehen sein, welche nur Licht in einem bestimmten Spektralbereich zu einem Sensor durchlässt. Beispielsweise kann die Erfassungseinrichtung 50 als sogenannter optischer Tomograph ausgebildet sein. Eine Erfassung im optischen Spektralbereich ist besonders kostengünstig und einfach. Eine Erfassung im infraroten Spektralbereich kann besonders genau sein, da es nicht zu Störeffekten durch Reflexionen und/oder weitere Lichtquellen kommen kann. Vorzugsweise wird dabei ein Spektralbereich im nahen infraroten Spektralbereich erfasst, mittels welchem Wärmestrahlung von Körpern deutlich über üblichen Umgebungstemperaturen erfasst werden kann. Insbesondere ist eine solche thermische Erfassung besonders geeignet, wenn der Teilbereich 38 der Oberfläche 20 durch das Anstrahlen mit dem Hochenergiestrahl 14 lediglich erwärmt wird und anderweitig nicht verändert wird.

Bei der Fertigungsvorrichtung 10 ist es möglich, günstig, schnell und effektiv eine Scangeschwindigkeit des Hochenergiestrahls 14 zu bestimmen. Dadurch ist bei der Herstellung eine Verbesserung und/oder eine Absicherung der Bauteilqualität möglich. Außerdem kann so ein Prozessverständnis des additiven Herstellungsverfahrens erhöht werden. Es sind Einsparungen möglich, da keine aufwendigen Prüf- und/oder Kalibrierungsmessungen zum Bestimmen der Scangeschwindigkeit mehr notwendig sind. Stattdessen kann eine kontinuierliche Prozessüberwachung implementiert werden.
- 10: Fertigungsvorrichtung
- 12: Strahlungsquelle
- 14: Hochenergiestrahl
- 16: Fokussiereinrichtung
- 18: Ablenkvorrichtung
- 20: Oberfläche
- 22: oberste Pulverschicht
- 24: Pulverbett
- 26: Bauplattform
- 28: Teil
- 30: Pulververteilungsvorrichtung
- 32: Rakel
- 34: angestrahlte Strecke
- 36: Mehrzahl von angestrahlten Strecken
- 38: Teilbereich
- 40: Shutter
- 42: Auswertevorrichtung
- 44: Pulsgeber
- 46: Teilabschnitt
- 48: Steuervorrichtung
- 50: Erfassungsvorrichtung

## Patentansprüche

1. Verfahren zum Ermitteln einer Scangeschwindigkeit eines Hochenergiestrahls (14) einer Fertigungsvorrichtung (10) zum additiven Herstellen eines Bauteils, insbesondere eines Bauteils einer Strömungsmaschine, umfassend die Schritte:
- Führen des mittels einer Strahlungsquelle (12) der Fertigungsvorrichtung (10) erzeugten Hochenergiestrahls (14) über eine Oberfläche (20);
- Erfassen einer während einer vorbestimmten Zeitdauer mit dem Hochenergiestrahl (14) angestrahlten Strecke (34) auf der Oberfläche (20) durch Aufzeichnen jeweiliger Helligkeitswerte der Oberfläche (30) mittels einer Erfassungsvorrichtung (50) während der vorbestimmten Zeitdauer, wobei die Erfassungsvorrichtung (50) zur Einhaltung der für die Erfassung vorbestimmten Zeitdauer mittels eines Pulsgebers (44) ein- und ausgeschaltet wird oder eine Blende der Erfassungseinrichtung (50) geöffnet und geschlossen wird;
- Berechnen der Scangeschwindigkeit in Abhängigkeit von der vorbestimmten Zeitdauer und der erfassten angestrahlten Strecke (34) mittels einer Auswertvorrichtung (42).

2. Verfahren nach Anspruch 1,
**dadurch gekennzeichnet, dass**
die angestrahlte Strecke (36) anhand von in der Erfassungseinrichtung (50) während der vorbestimmten Zeitdauer belichteten Pixeln ermittelt wird.

3. Verfahren nach einem der Ansprüche 1 oder 2,
**dadurch gekennzeichnet, dass**
der Hochenergiestrahl (14) während der Erfassung in einer geraden Linie und/oder einer gekrümmten Linie über die Oberfläche (20) geführt wird.

4. Verfahren nach einem der vorhergehenden Ansprüche,
**dadurch gekennzeichnet, dass**
während der vorbestimmten Zeitdauer eine Mehrzahl von angestrahlten Strecken (36) auf der Oberfläche (20) mittels der Erfassungsvorrichtung (50) erfasst wird und die Scangeschwindigkeit in Abhängigkeit von der vorbestimmten Zeitdauer und der erfassten Mehrzahl von angestrahlten Strecken (36) mittels der Auswertvorrichtung (42) berechnet wird.

5. Verfahren nach Anspruch 4,
**dadurch gekennzeichnet, dass**
die Scangeschwindigkeit in Abhängigkeit von einer Zeitdauer, welche für einen Wechsel der Anstrahlung einer ersten Strecke (34) zu einer zweiten Strecke (34) benötigt wird, mittels der Auswertvorrichtung (42) berechnet wird.

6. Verfahren nach einem der vorhergehenden Ansprüche,
**dadurch gekennzeichnet, dass**
der Hochenergiestrahl (14) wenigstens während der Erfassung über einen bestimmten Teilbereich (38) der Oberfläche (20) geführt wird, welcher nicht ein Teilbereich der Oberfläche (20) ist, welcher zum additiven Herstellen des Bauteils genutzt wird.

7. Verfahren nach einem der vorhergehenden Ansprüche,
**dadurch gekennzeichnet, dass**
die angestrahlte Strecke (34) und/oder die Mehrzahl von angestrahlten Strecken (36) mittels der Erfassungseinrichtung (50) im sichtbaren und/oder infraroten Spektralbereich erfasst wird.

8. Verfahren zum Betreiben einer Fertigungsvorrichtung (10) zum additiven Herstellen eines Bauteils, insbesondere eines Bauteils einer Strömungsmaschine,
**dadurch gekennzeichnet, dass**
eine Scangeschwindigkeit eines mittels mindestens einer Strahlungsquelle (12) der Fertigungsvorrichtung (10) erzeugten und über eine Oberfläche (20) geführten Hochenergiestrahls (14) mittels eines Verfahrens nach einem der Ansprüche 1 bis 7 ermittelt wird.

9. Verfahren nach Anspruch 8,
**dadurch gekennzeichnet, dass**
eine Steuerung der Fertigungsvorrichtung (10) in Abhängigkeit von der ermittelten Scangeschwindigkeit kalibriert wird.

10. Verfahren nach einem der Ansprüche 8 oder 9,
**dadurch gekennzeichnet, dass**
mittels des Anstrahlens der Oberfläche (20) das Bauteil wenigstens teilweise hergestellt wird, wobei die Scangeschwindigkeit wenigstens teilweise während dieser Herstellung des Bauteils erfasst wird.

11. Verfahren nach Anspruch 10,
**dadurch gekennzeichnet, dass**
die Strahlungsquelle (12) und/oder eine Ablenkvorrichtung (18) der Fertigungsvorrichtung (10) zum Ablenken des Hochenergiestrahls (14) in Abhängigkeit von der ermittelten Scangeschwindigkeit gesteuert wird.

12. Fertigungsvorrichtung (10) zum additiven Herstellen eines Bauteils, insbesondere eines Bauteils einer Strömungsmaschine, mit wenigstens einer Strahlungsquelle (12) zum Erzeugen eines Hochenergiestrahls (14), welcher über eine Oberfläche (20) führbar ist, mit wenigstens einer Erfassungsvorrichtung (50) zum Erfassen der während einer vorbestimmten Zeitdauer mit dem Hochenergiestrahl (14) angestrahlten Strecke (34) auf der Oberfläche (20) durch Aufzeichnen jeweiliger Helligkeitswerte der Oberfläche (20) während der vorbestimmten Zeitdauer, wobei die Erfassungsvorrichtung (50) einen Pulsgeber (44) oder eine Blende aufweist, mit wenigstens einer Auswertvorrichtung (42) zum Berechnen einer Scangeschwindigkeit in Abhängigkeit von der vorbestimmten Zeitdauer und der erfassten angestrahlten Strecke (34), und mit einer Steuervorrichtung (48), **dadurch gekennzeichnet, dass** die Steuervorrichtung (48) ausgelegt ist, die Erfassungsvorrichtung (50) mittels des Pulsgebers (44) ein- und auszuschalten oder mittels der Blende die Erfassungsvorrichtung (50) zu öffnen und zu schließen, um die vorbestimmte Zeitdauer für die Erfassung einzuhalten.

13. Fertigungsvorrichtung (10) nach Anspruch 12,
**dadurch gekennzeichnet, dass**
die Fertigungsvorrichtung (10) dazu ausgebildet ist, das Bauteil mittels eines selektiven Laserschmelzverfahrens herzustellen.

## Claims

1. A method for determining a scanning speed of a high-energy beam (14) of a manufacturing device (10) for the additive manufacturing of a component, in particular a component of a turbomachine, comprising the steps:
- Guiding the high-energy beam (14) generated by means of a radiation source (12) of the manufacturing device (10) over a surface (20);
- Detecting a section (34) illuminated by the high-energy beam (14) on the surface (20) for a predetermined time period by recording respective brightness values of the surface (30) by means of a detection device (50) during the predetermined time period, wherein the detection device (50) for compliance with the time period predetermined for the detection is switched on and off by means of a pulse generator (44) or an aperture of the detection device (50) is opened and closed;
- Calculating the scanning speed as a function of the predetermined time period and the detected illuminated section (34) by means of an evaluation device (42).

2. The method according to claim 1, **characterized in that** the illuminated section (36) is determined on the basis of pixels exposed in the detection device (50) during the predetermined time period.

3. The method according to one of claims 1 or 2, **characterized in that** during the detection the high energy beam (14) is guided over the surface (20) in a straight line and/or in a curved line.

4. The method according to one of the preceding claims, **characterized in that** during the predetermined time period a plurality of illuminated sections (36) on the surface (20) is detected by means of the detection device (50) and the scanning speed is calculated as a function of the predetermined time period and the detected plurality of illuminated sections (36) by means of the evaluation device (42).

5. The method according to claim 4, **characterized in that** the scanning speed is calculated by means of the evaluation device (42) as a function of a time period required for changing the illumination of a first section (34) to a second section (34).

6. The method according to one of the preceding claims, **characterized in that** the high-energy beam (14) is guided at least during the detection over a specific partial area (38) of the surface (20) that is not a partial area of the surface (20) used for additive manufacturing of the component.

7. The method according to one of the preceding claims, **characterized in that** the illuminated section (34) and/or the plurality of illuminated sections (36) is detected in the visible and/or infrared spectral range by means of the detection device (50).

8. The method for operating a manufacturing device (10) for the additive manufacturing of a component, in particular a component of a turbomachine, **characterized in that** a scanning speed of a high-energy beam (14) generated by means of at least one radiation source (12) of the manufacturing device (10) and guided over a surface (20) is determined by means of a method according to one of claims 1 through 7.

9. The method according to claim 8, **characterized in that** a control unit of the manufacturing device (10) is calibrated as a function of the determined scanning speed.

10. The method according to one of claims 8 or 9, **characterized in that** the component is at least partially manufactured by means of the surface (20) being illuminated, the scanning speed being at least partially recorded during this manufacture of the component.

11. The method according to claim 10, **characterized in that** the radiation source (12) and/or a deflection device (18) of the manufacturing device (10) for deflecting the high-energy beam (14) is controlled as a function of the determined scanning speed.

12. A manufacturing device (10) for additively manufacturing a component, in particular a component of a turbomachine, with at least one radiation source (12) for generating a high-energy beam (14) that can be guided over a surface (20), with at least one detection device (50) for detecting the section (34) illuminated by the high energy beam (14) on the surface (20) for a predetermined time period by recording respective brightness values of the surface (20) during the predetermined time period, the detection device (50) comprising a pulse generator (44) or having an aperture, with at least one evaluation device (42) for calculating a scanning speed as a function of the predetermined time period and the detected illuminated section (34), and with a control device (48), **characterized in that** the control device (48) is designed to switch the detection device (50) on and off by means of the pulse generator (44) or to open and close the detection device (50) by means of the aperture for compliance with the predetermined time period for the detection.

13. The manufacturing device (10) according to claim 12, **characterized in that** the manufacturing device (10) is designed to manufacture the component by means of a selective laser melting process.

## Revendications

1. Procédé de détermination d'une vitesse de balayage d'un faisceau à haute énergie (14) d'un dispositif (10) de fabrication additive d'un composant, en particulier d'un composant d'une turbomachine, comprenant les étapes :
- de guidage du faisceau à haute énergie (14) produit au moyen d'une source de rayonnement (12) du dispositif de fabrication (10) sur une surface (20) ;
- de détection d'un chemin (34) irradié par le faisceau à haute énergie (14) sur la surface (20) pendant une durée prédéfinie par l'enregistrement de valeurs de luminosité respectives de la surface (30) au moyen d'un dispositif de détection (50) pendant la durée prédéfinie, le dispositif de détection (50) étant mis en marche et arrêté au moyen d'un émetteur d'impulsions (44) ou un obturateur du dispositif de détection (50) étant ouvert et fermé afin de maintenir la durée de détection prédéfinie ;
- de calcul de la vitesse de balayage en fonction de la durée prédéfinie et du chemin (34) irradié détecté au moyen d'un dispositif d'évaluation (42).

2. Procédé selon la revendication 1, **caractérisé en ce que** le chemin (36) irradié est déterminé sur la base des pixels exposés dans le dispositif de détection (50) pendant la durée prédéfinie.

3. Procédé selon l'une des revendications 1 ou 2, **caractérisé en ce que** le faisceau à haute énergie (14) est guidé sur la surface (20) en ligne droite et/ou en ligne courbe pendant la détection.

4. Procédé selon l'une des revendications précédentes, **caractérisé en ce que**, pendant la durée prédéfinie, une pluralité de chemins (36) irradiés sur la surface (20) sont détectés au moyen du dispositif de détection (50) et la vitesse de balayage est calculée au moyen du dispositif d'évaluation (42) en fonction de la durée prédéfinie et de la pluralité de chemins (36) irradiés détectés.

5. Procédé selon la revendication 4, **caractérisé en ce que** la vitesse de balayage est calculée au moyen du dispositif d'évaluation (42) en fonction d'une durée qui est requise pour faire passer le rayonnement d'un premier chemin (34) à un second chemin (34).

6. Procédé selon l'une des revendications précédentes, **caractérisé en ce que** le faisceau à haute énergie (14) est guidé, au moins pendant la détection, sur une zone partielle spécifique (38) de la surface (20), laquelle zone n'est pas une zone partielle de la surface (20), utilisée pour la fabrication additive du composant.

7. Procédé selon l'une des revendications précédentes, **caractérisé en ce que** le chemin (34) irradié et/ou la pluralité de chemins irradiés (36) est/sont détecté(s) au moyen du dispositif de détection (50) dans la zone spectrale visible et/ou infrarouge.

8. Procédé permettant de faire fonctionner un dispositif de fabrication (10) pour la fabrication additive d'un composant, en particulier d'un composant d'une turbomachine, **caractérisé en ce qu'**une vitesse de balayage d'un faisceau à haute énergie (14) produit au moyen d'au moins une source de rayonnement (12) du dispositif de fabrication (10) et guidé sur une surface (20) est déterminée au moyen d'un procédé selon l'une des revendications 1 à 7.

9. Procédé selon la revendication 8, **caractérisé en ce qu'**une commande du dispositif de fabrication (10) est étalonnée en fonction de la vitesse de balayage déterminée.

10. Procédé selon l'une des revendications 8 ou 9, **caractérisé en ce que** le composant est au moins partiellement fabriqué au moyen de l'irradiation de la surface (20), la vitesse de balayage étant détectée au moins partiellement pendant ladite fabrication du composant.

11. Procédé selon la revendication 10, **caractérisé en ce que** la source de rayonnement (12) et/ou un dispositif de déviation (18) du dispositif de fabrication (10) permettant de dévier le faisceau à haute énergie (14) est commandé en fonction de la vitesse de balayage déterminée.

12. Dispositif de fabrication (10) pour la fabrication additive d'un composant, en particulier d'un composant d'une turbomachine, comportant au moins une source de rayonnement (12) pour la production d'un faisceau à haute énergie (14) pouvant être guidé sur une surface (20), au moins un dispositif de détection (50) pour la détection du chemin (34) irradié sur la surface (20) par le faisceau à haute énergie (14) pendant une durée prédéfinie, par l'enregistrement de valeurs de luminosité respectives de la surface (20) pendant la durée prédéfinie, le dispositif de détection (50) comportant un émetteur d'impulsions (44) ou un obturateur, au moins un dispositif d'évaluation (42) permettant de calculer une vitesse de balayage en fonction de la durée prédéfinie et du chemin (34) irradié détecté, et un dispositif de commande (48), **caractérisé en ce que** le dispositif de commande (48) est conçu pour mettre en marche et arrêter le dispositif de détection (50) au moyen de l'émetteur d'impulsions (44) ou pour ouvrir et fermer le dispositif de détection (50) au moyen de l'obturateur afin de maintenir la durée prédéfinie pour la détection.

13. Dispositif de fabrication (10) selon la revendication 12, **caractérisé en ce que** le dispositif de fabrication (10) est conçu pour la fabrication du composant au moyen d'un procédé sélectif de fusion par laser.
